# DEMANDE DE BREVET EUROPEEN

(11) **EP 1 359 328 A1**
(43) Date de publication de la demande: **05.11.2003**
(21) Numéro de dépôt: 03405264.7
(22) Date de dépôt: 16.04.2003
(51) Int. Cl.: F16B 7/04, F16B 5/06

(54) **Dispositif d'assemblage pour des éléments en forme de barre et/ou des panneaux, notamment pour la réalisation de gabarits, de meubles et de guides**

(30) Priorité: 26.04.2002 CH 7162002
(71) Demandeur: Seewer, Raymonde, CH-1074 Mollie-Margot (CH)
(72) Inventeur: Seewer, Raymonde, CH-1074 Mollie-Margot (CH)

(57) **Abrégé**

Ce dispositif est constitué d'un bloc parallélépipédique rectangle (1) présentant deux trous (7, 8) traversant ledit bloc de sections sensiblement identiques à celle des éléments en forme de barre à assembler de manière à ce que lesdits éléments puissent y être introduits et maintenus par des moyens prévus pour cela (TF1, TF2). Les axes desdits deux trous sont parallèles. Le bloc comporte des perçages filetés (TF), des perçages traversant (TT) et deux perçages obliques (2, 3) permettant de le fixer à d'autres dispositifs et/ou à des panneaux ou à des parois.

## Description

L'invention a pour objet un dispositif d'assemblage pour des éléments en forme de barres et/ou des panneaux, notamment pour la réalisation de gabarits, de meubles et de guides.

On connaît des dispositifs d'assemblage d'éléments en forme de barre, notamment par le brevet EP 670428. Ce brevet décrit un appareil d'assemblage comportant plusieurs éléments destinés à permettre l'assemblage d'éléments allongés et/ou de panneaux. Bien que cet appareil donne satisfaction, il est difficile à mettre en oeuvre car il comporte beaucoup de pièce pour réaliser un assemblage.

Les buts de l'invention sont de fournir un dispositif d'assemblage ne comportant qu'un type d'élément permettant d'assembler des éléments allongés et/ou des panneaux.

Ces buts sont atteints avec un dispositif d'assemblage pour des éléments en forme de barres et/ou des panneaux, notamment pour la réalisation de gabarits, de meubles et de guides, selon l'invention définie à la revendication 1.

L'invention sera mieux comprise, ses caractéristiques et ses avantages apparaîtront plus clairement à la lecture de la description de formes d'exécution données uniquement à titre d'exemple en regard des dessins sur lesquels :
Les figures 1a, b, et c représente une forme d'exécution du dispositif d'assemblage selon l'invention en vue, respectivement en plan, de face et de profil.
La figure 2 représente une barrette faisant partie du dispositif représenté à la figure 1.
La figure 3 représente le dispositif de la figure 1 en vue axonométrique.
La figure 4 représente schématiquement en vue axonométrique une utilisation mettant en oeuvre trois dispositifs d'assemblage identiques à celui représenté à la figure 1.
La figure 5 représente schématiquement en vue axonométrique une utilisation mettant en oeuvre deux dispositifs d'assemblage identiques à celui représenté à la figure 1.
La figure 6 représente schématiquement en vue axonométrique une variante de l'utilisation représentée à la figure 5.

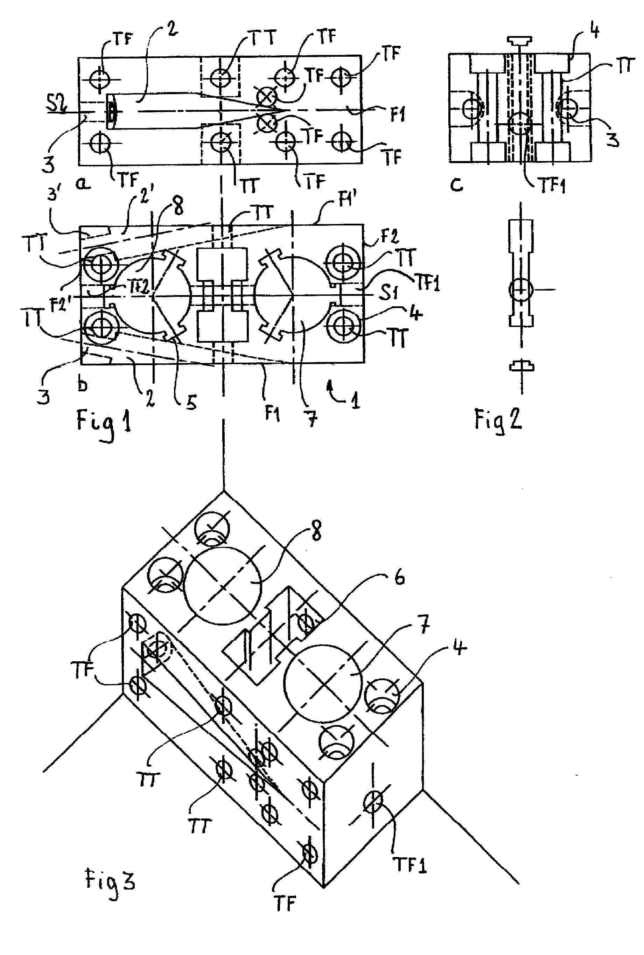

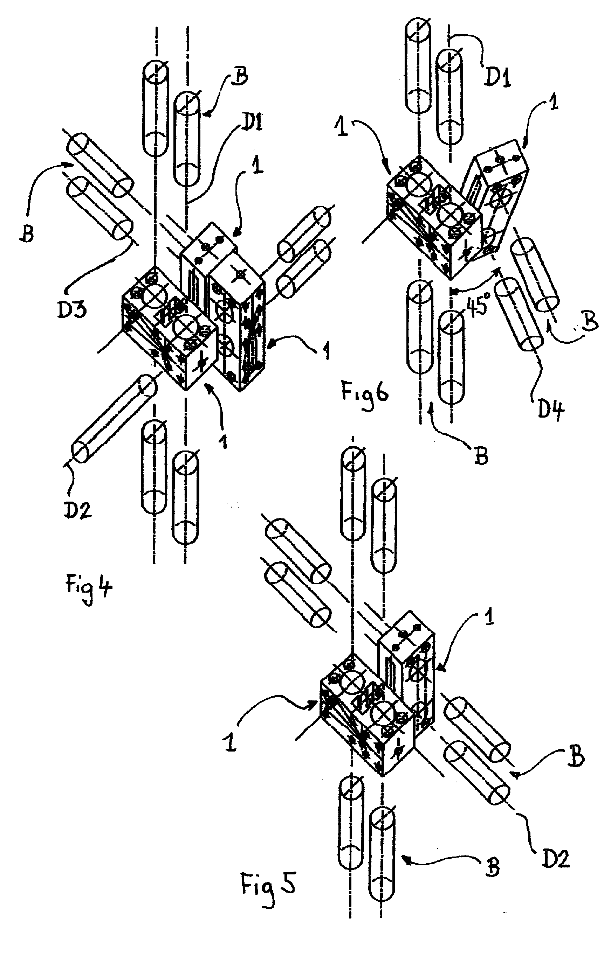

Comme on le voit sur la figure 1 un dispositif d'assemblage pour des éléments en forme de barres et/ou des panneaux selon l'invention, est constitué par un bloc 1 en forme de parallélépipède rectangle, de préférence en matériaux légers, par exemple en alliage d'aluminium ou en matière synthétique. Le bloc aura avantageusement des dimensions longueur/ largeur/ hauteur qui seront dans les rapport suivants 2 / 1 / 0.76 , par exemple: 74 mm, 37 mm, 28.5 mm. Ce bloc présente deux trous traversant 7 et 8 (figure 1b) ayant, dans la forme d'exécution représentée, une section circulaire, mais qui pourraient aussi avoir une section carrée ou elliptique suivant la section des éléments à assembler. Ces trous sont destinés à recevoir des éléments en forme de barre, qui dans la forme d'exécution représentée sont des barres de section circulaire (cf. figure 4, 5 et 6). Afin de ne pas surcharger le dessin certains traits cachés n'ont pas été représentés, par exemple les trous 7 et 8 , les perçages traversant et filetés sur la figure 1a. Les axes desdits trous 7 et 8 sont parallèles entre eux et perpendiculaires à la face dudit bloc représentée sur la figure 1a. Les trous 7 et 8 présentent chacun trois rainures 5 disposées à 120° les unes des autres sur le pourtour desdits trous et destinées à recevoir trois barrettes, dont une est représentée à la figure 2. Ces barrettes sont en matière synthétique, par exemple du polyacétal, elles ont pour but de permettre de mieux maintenir les éléments en forme de barre en évitant le frottement, elles ont aussi pour but de répartir la force au moment du serrage des vis de maintien (non représentées) introduites dans les perçages filetés TF1 et TF2, perçages disposés sur les faces F2 et F2'.

Sur la figure 1b il apparaît que le bloc 1 présente un plan de symétrie S1 perpendiculaire à la face sur laquelle débouchent les trous 7 et 8. De plus, ledit bloc présente quatre perçages traversant TT ayant des axes parallèles aux axes desdits trous 7 et 8, ces perçages sont disposés proches des angles de ladite face. Les perçage TT présente des entrées élargies 4 pour permettre d'introduire les têtes des vis que lesdits trous sont destinés à recevoir. Enfin, la face que l'on nommera face supérieure représentée à la figure 1b présente dans sa partie centrale une ouverture 6 (figure 3) destinée à recevoir des écrous ou des vis lorsque le bloc 1 est fixé à un autre bloc semblable.

Les faces F1 et F1' perpendiculaires à la face supérieure sont symétriques, donc identiques, relativement au plan de symétrie S1, qui comprend les axes des trous 7 et 8. La face F1 présente deux perçages traversant TT, qui débouchent dans l'ouverture 6 (voir figure 3), et huit perçages borgnes TF comportant un filetage à l'intérieur. Ces perçages TT et TF sont destinés à recevoir des vis qui permettent de lier ou fixer des dispositifs d'assemblage ente eux comme on pourra mieux le voir par la suite sur les figures 4, 5 et 6. La répartition de ces perçages est telle que deux dispositifs d'assemblage peuvent être fixés l'un à l'autre de manière que les axes des trous 7 et 8 des deux dispositifs soient parallèles, perpendiculaires ou à 45°.

De plus, la face F1 présente un perçage 3 oblique créant une creusure 2 dans ladite face. Ce perçage 3 est destiné à recevoir une vis permettant de fixer un dispositif d'assemblage 1 contre un panneau ou contre une paroi. En effet, par exemple en fixant deux dispositifs contre une paroi et en les reliant par un élément en forme de barre on réalisera une barre pour suspendre des linges dans une salle de bain ou une tringle pour suspendre des rideaux. Dans une autre utilisation, en fixant quatre dispositifs aux quatre angles d'un panneau rectangulaire de manière à ce que les axes des trous 7 et 8 soient perpendiculaires à la surface du panneau il sera possible en introduisant un élément en forme de barre dans chaque dispositif de faire une table ou un siège.

Afin de montrer les multiples possibilités d'utilisation de dispositif selon l'invention il a été représenté dans les figures 4, 5 et 6 quelques combinaisons de dispositifs d'assemblage.

Sur la figure 4 il a été représenté une combinaison de trois dispositifs d'assemblage 1 permettant d'assembler des éléments en forme de barre B, par exemple des tubes de section circulaire, dans trois directions D1, D2 et D3 perpendiculaires entre-elles.

Sur la figure 5 il a été représenté une combinaison de deux dispositifs d'assemblage 1 permettant d'assembler des éléments en forme de barre B, par exemple des tubes de section circulaire, dans deux directions D1 et D2 perpendiculaires entre-elles.

Sur la figure 6 on montre comment une combinaison de deux dispositifs peuvent être disposés pour définir deux directions D1 et D4 formant un angle de 45°.

## Revendications

1. Dispositif d'assemblage pour des éléments en forme de barres et/des panneaux, notamment pour la réalisation de gabarits, de meubles et de guides, **caractérisé en ce qu'**il est constitué d'un bloc parallélépipédique rectangle (1) présentant deux trous (7, 8) traversant ledit bloc de sections identiques destinés a recevoir des éléments en forme de barre à assembler de manière à ce que lesdits éléments puissent y être introduits et maintenus par des moyens prévus pour cela (TF1, TF2), les axes desdits deux trous étant parallèles, et **en ce que** ledit bloc comporte des moyens (2, 3, TT, TF) permettant de le fixer à d'autres dispositifs et/ou à des panneaux ou à des parois.

2. Dispositif selon la revendication 1, **caractérisé en ce que** la section desdits trous est circulaire de manière à ce que l'on puisse introduire des élément en forme de barre de section circulaire.

3. Dispositif selon l'une des revendications 1 et 2, **caractérisé en ce que** ledit bloc a les proportions suivantes : longueur/ largeur/hauteur dans les rapports suivants : 2 / 1 / 0.76, par exemple : 74 mm / 37 mm / 28.5 mm, et **en ce que** les axes desdits trous sont parallèles à sa hauteur.

4. Dispositif selon l'une des revendications 1 à 3, **caractérisé en ce que** les moyens de maintien desdits éléments sont constitués par des perçages filetés (TF1, TF2) dans ledit bloc, perçages dans lesquels sont introduites des vis destinées à serrer lesdits éléments à l'intérieur des trous.

5. Dispositif selon l'une des revendications 1 à 4, **caractérisé en ce que** les moyens permettant de fixer le dispositif à d'autres dispositifs et/ou à des parois sont constitués par des perçages (TT) traversant ledit bloc (1) et par des perçages borgnes filetés (TF).

6. Dispositif selon l'une des revendications 1 à 5, **caractérisé en ce que** l'intérieur des trous destiné à recevoir les éléments en forme de barre est garni de trois barrettes longitudinales disposées à 120° les unes des autres évitant le frottement et répartissant la force de serrage.
